# EUROPEAN PATENT APPLICATION

(11) **EP 1 369 093 A1**
(43) Date of publication of application: **10.12.2003**
(21) Application number: 03012222.0
(22) Date of filing: 06.06.2003
(51) Int. Cl.: A61D 5/00

(54) **Equine dental tool**

(30) Priority: 06.06.2002 US 165829
(71) Applicant: Dipietro, John J., Antioch, CA 94509 (US)
(72) Inventor: Dipietro, John J., Antioch, CA 94509 (US)
(74) Representative: Modiano, Guido, Dr.-Ing.

(57) **Abstract**

An equine dental tool utilizing a sheath which encloses a rotatable shaft. The shaft terminates in an abrading element which is employed to grind the teeth of a horse or other ungulate. A rotating cable powered by a motor connects to the one end of the rotatable shaft.

## Description

### BACKGROUND OF THE INVENTION

The present invention relates to a novel and useful equine dental tool.

The dental structure of a horse must often be attended to in order to allow the horse to properly consume food and to permit the use of a bit without harming the horse. Normally bit seats are placed in the mouth of a horse and attached to reins when the horse is being ridden. Horses are subject to a variety of dental malocclusions. For example, molars may be stepped or ramped, accentuated transverse ridges may occur in the molars, bone spurs may be found in the jaw, bites occur which are offset or diagonal, and the like. In the case of placement of a bit in the mouth of a horse, the edges of the molars must be rounded. Such rounding eliminates damage to the tongue and cheek portions of the horse which may occur by the existence of sharp edges on the lingual and buckle edges of a molar. When performing dental work on a horse, manipulation of dental devices is complicated by the depth of the molar relative to the exterior of the jaw of the horse and the limited opening through the mouth of the horse to gain access to the molars.

A dental device which is capable of grindings the molars of a horse in a safe and efficient manner would be a notable advance in the veterinary arts.

### BRIEF SUMMARY OF THE INVENTION

In accordance with the present invention a novel and useful equine dental tool is herein provided.

A dental tool of the present invention utilizes a rotatable shaft which is enclosed by a sheath to protect the same. The shaft may be supported within the sheath by one or more bearings within a chamber formed by the sheath. In addition, the sheath includes a first end portion and a second end portion which permit access to the rotatable shaft therewithin.

An abrading element is also employed in the present invention. The abrading element is intended to contact the edges of teeth of a horse in order to sculpt the same during dental treatments. The abrading element is linked to the rotatable shaft at the first end portion of the sheath. Preferably, the rotatable shaft rotates about a first axis while the abrading element rotates about a second axis which is angularly disposed relative to the first axis. In this regard, a miter gear arrangement may be employed to transfer the direction of rotation of the rotatable shaft to rotation in another direction. In this manner, the abrading element is visible and useable to the operator of the tool of the present invention. The abrading element may take the form of a spindle-shaped rasp although other structures may work as well.

Motive means is also used for rotating the rotatable shaft at the second end portion of the sheath. Such linkage may be of a conventional configuration and include the provision of a cable-type driver.

In addition, a gripping surface may be formed on the exterior of the sheath to aid the user in control of the tool of the present invention. Such gripping surface may take the form of a knurled surface, a rubberized surface, and the like.

It may be apparent to that a novel and useful equine dental tool has been hereinabove described.

It is therefore an object of the present invention to provide an equine dental tool which is useful in grinding the molars of a horse to prevent damage to the check and tongue of the horse.

Another object of the present invention is to provide an equine dental tool which grinds the edges of the molars of the horse to allow the use of a bit without damage to the horse.

Another object of the present invention is to provide an equine dental tool which permits the user to sculpt the teeth of a horse when the horse is sedated and the entrance to the mouth of the horse is lifted.

A further object of the present invention is to provide an equine dental tool allows the user to closely follow the grinding of the teeth of the horse quickly and efficiently.

Yet another object of the present invention is to provide an equine dental tool which eliminates manual grinding or abrading of the teeth of a horse and is operable by a single person.

The invention possesses other objects and advantages especially as concerns particular characteristics and features thereof which will become apparent as the specification continues.

### BRIEF DESCRIPTION OF THE SEVERAL VIEWS OF THE DRAWING

Fig. 1 is a top plan view of the tool of the present invention with a broken portion along the sheath and contained rotatable shaft.
Fig. 2 is a top plan view of the abrading end of the tool of the present invention depicting the linkage of the rotatable shaft in exploded and broken configuration, with a partial section of the sheath and bearing supporting the rotatable shaft.
Fig. 3 is a partial broken top plan view depicting the linkage of the motivating means with the rotatable shaft within the sheath of the tool.
Fig. 4 is a schematic top plan view showing the use of the abrading element of the tool of the present invention on a molar of a horse.
Fig. 5 is a schematic broken front elevational view depicting the tool of the present invention being used on the molar of a horse.

For a better understanding of the invention reference is made to the following detailed description of the preferred embodiments thereof which should be taken in conjunction with the prior described drawings.

### DETAILED DESCRIPTION OF THE PREFERRED EMBODIMENTS OF THE INVENTION

Various aspects of the present invention will evolve from the following detailed description of the preferred embodiments thereof which should be referenced to the prior delineated drawings.

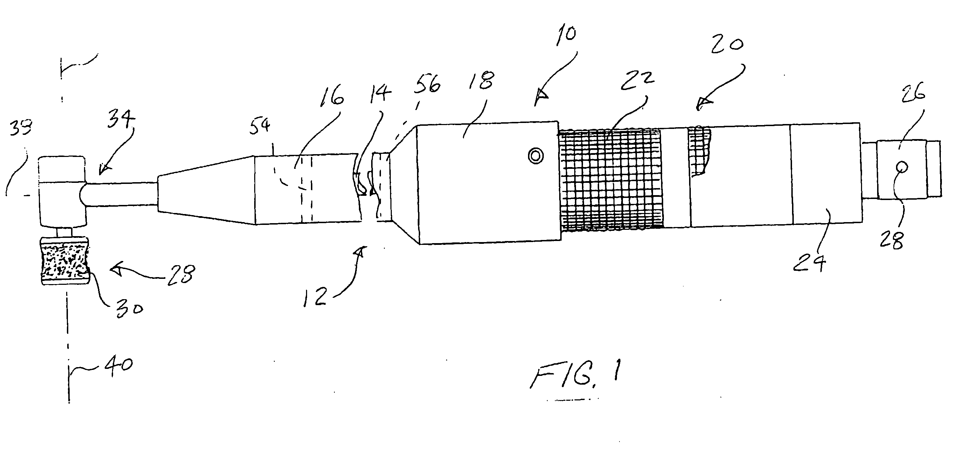

A preferred embodiment of the invention is shown in the drawings by reference character 10. The equine dental tool 10 includes as one of its elements a sheath 12 which encloses a rotatable shaft 14. Sheath 12 includes an elongated tubular section 16 which terminates in a flared end 18. A grip 20 is provided with a gripping surface 22 of knurled configuration. Of course, other surface configurations may be suitable in this regard. Butt member 24 is formed integrally with grip 20 and terminates in a coupler 26 having a spring-loaded button 28. It should be noted that elongated section 16 has been broken in Fig. 1. Typically, elongated tubular section 16 may span, typically, 35-40 centimeters for use with a horse. This permits tool 10 to reach the rear teeth of a horse with efficiency.

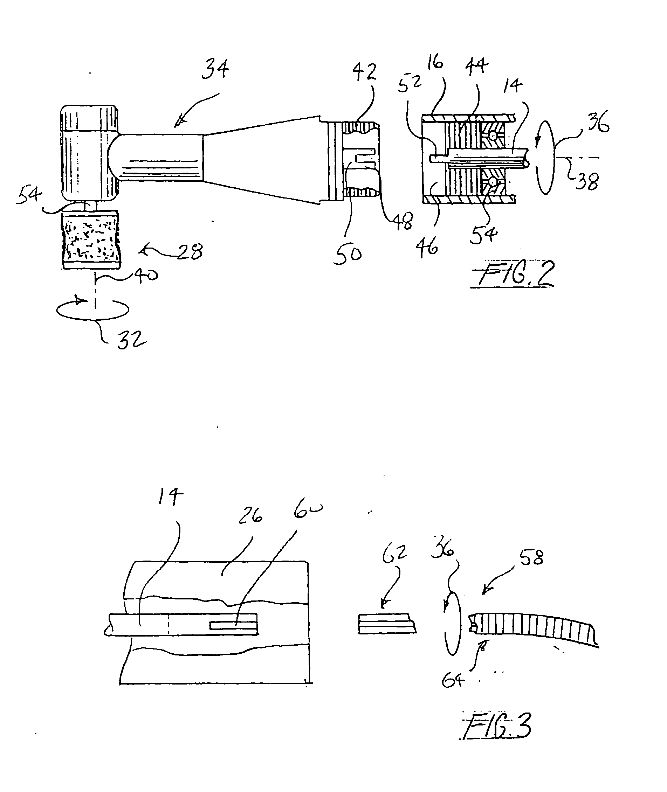

Tool 10 also includes abrading element 28 which may take the form of a rotatable spindle-shaped or "apple core" rasp. Abrading element 28 includes a rasp surface 30 which is suitable to grind the teeth of a horse or other ungulates. Directional arrow 32, Fig. 2, indicates the rotation of abrading element 28. Abrading element 28 connects to a miter gear adapter 34 of conventional configuration. For example, a miter gear adapter Model number IC-300, manufactured by NSK of Tokyo, Japan would suffice in this regard. The details of the miter gear operation of the miter gear adapter 34 will not be further delineated. However, needless to say, the rotational movement of shaft 14, directional arrow 36 Fig. 2 along axis 38 is transferred to a rotational movement of a abrading element 38 about axis 40, which is essentially at a right angle to axis 38.

Fig. 2 details in the interconnection between rotatable shaft 14 and mitered gear adapter 34. In essence, adapter 34 includes an external threaded surface 42 which engages an internal threaded surface 44 of chamber 46 within elongated section 16 of sheath 12. First end portion 48 of shaft 50 engages blade 52 when threaded surface 42 threadingly engages threaded surface 44. Output shaft 54 of miter gear adapter 34 connects to abrading element 28 in a removable manner. Shaft 14 is supported within chamber 46 of elongated section 16 of sheath 12 by bearing 54. It should be understood that other bearings such as bearing 56, shown schematically on Fig. 1, may be employed within sheath 12 to support rotatable shaft 14.

Fig. 3 depicts the interconnection between rotatable shaft 14 at coupler 26 via a flexible cable-like rotational member 58. For example, rotatable shaft 14 may include a slot 60 which fits a splined end portion 62 of rotatable cable member 58. Needless to say, spline 62 meets with slot 60 of shaft 14 and is held thereto by conventional means. For example, the rotatable cable 58 may be provided by a tool Model number 7360, Flex-Shaft, manufactured by Dremel of Racine, Wisconsin in this regard. Again, directional arrow 36 represents the rotational motion provided by rotating flexible cable 58.

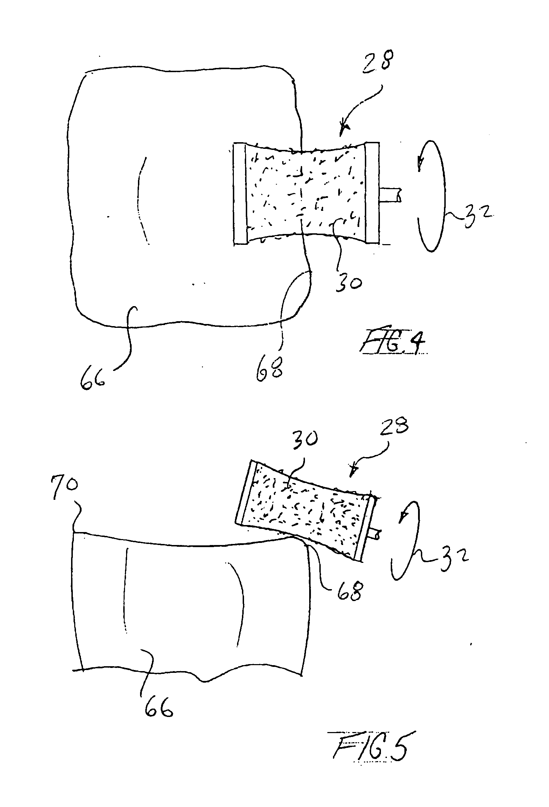

In operation, the user sedates a horse or other ungulate in order to provide dental care using the tool 10 of the present invention. The mouth of such animal, such as a horse, is then propped open approximately 5-6 centimeters. A light is provided within the mouth of the horse to illuminate the teeth found therewithin. Tool 10 is then employed through motivation means 64 which is the cable-like tool noted above. Motive means cable 58 is linked to rotatable shaft 14 which in turn rotates apple-core abrading element 28 according to directional arrow 32. Rasp surface 30 of abrading elements 28 is selected to safely abrade or remove material from molar 66, Figs. 4 and 5. Abrading element 28 is passed along the edge 68 of molar 66 to round the same. For example, edge 68, Fig. 5, is shown in its rounded configuration following the operation of abrading element 28. Opposite edge 70 is depicted as having a sharp configuration which is unsuitable for the use of a bit in the mouth of a horse having molar 66. Of course, tool 10 may be employed to grind or sculpt other teeth of a horse or ungulate such as the incisors, premolars, cahines, wolf teeth, and the like.

While in the foregoing, embodiments of the present invention have been set forth in considerable detail for the purposes of making a complete disclosure of the invention, it may be apparent to those of skill in the art that numerous changes may be made in such detail without departing from the spirit and principles of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An equine dental tool,
comprising:
a. a rotatable shaft;
b. a sheath having a wall portion forming a chamber, said sheath further including a first end portion and a second end portion said rotatable shaft being rotatable within said chamber;
c. an abrading element, said element being linked to said rotatable shaft at said first end portion of said sheath; and
d. motive means for rotating said rotatable shaft, said motive means being linked to said rotatable shaft at said second end portion of said sheath.

2. The tool of claim 1 which further comprises a bearing rotatably supporting said shaft within said sheath.

3. The tool of claim 1 which additionally comprises a gripping surface formed on the exterior of said sheath.

4. The tool of claim 3 in which said gripping surface comprises a knurled surface.

5. The tool of claim 1 which additionally comprises a flexible cable driver.

6. The tool of claim 1 in which said abrading element comprises a spindle-shaped member.

7. The tool of claim 1 in which said rotatable shaft lies along a first axis and further comprises means for rotating said abrading element about a second axis at an angular orientation relative to said first axis.

8. The tool of claim 8 in which said first axis is substantially perpendicular to said second axis.

9. The tool of claim 7 which further comprises a bearing rotatably supporting said shaft within said sheath.

10. The tool of claim 7 which additionally comprises a gripping surface formed on the exterior of said sheath.

11. The tool of claim 8 in which said gripping surface comprises a knurled surface.

12. The tool of claim 7 which additionally comprises a flexible cable driver.

13. The tool of claim 7 in which said abrading element comprises a spindle-shaped member.
